# EUROPEAN PATENT SPECIFICATION

(11) **EP 3 863 416 B1**
(45) Date of publication and mention of the grant of the patent: **06.11.2024**
(21) Application number: 19795716.0
(22) Date of filing: 10.10.2019
(51) Int. Cl.: A23G 3/42, A23G 3/54, A23L 7/126, A23L 25/00, A23G 3/44

(54) **DUAL-TEXTURE COLD-FORMED PROTEIN BAR**
DUAL-TEXTUR KALTFORMIGER PROTEIN-RIEGEL
BARRE DE PROTÉINES À DOUBLE TEXTURE FORMÉE À FROID

(30) Priority: 11.10.2018 US 201862744402 P
(43) Date of publication of application: 18.08.2021
(73) Proprietor: Kellanova, Battle Creek, MI 49016 (US)
(72) Inventor: TURPIN, Jana Henry, Delton, MI 49046 (US); MULLINS, Charles Edward, Kalamazoo, MI 49009 (US); LARUE, Natalie Ja, Paw Paw, MI 49079 (US)
(74) Representative: Pons Ariño, Angel
(86) International application number: PCT/US2019/055531
(87) International publication number: WO 2020/077040

(56) References cited:
- WO-A2-01/64044
- US-A1- 2005 249 868
- US-A1- 2010 104 687
- "Raw snickers bar", 8 July 2015 (2015-07-08), XP002796947, Retrieved from the Internet <URL:http://healthyessencefood.com/recipe/raw-snickers-bar> [retrieved on 20200115]
- "No-bake snickers protein bars", 9 February 2014 (2014-02-09), XP002796948, Retrieved from the Internet <URL:https://busybuthealthy.com/no-bake-snickers-protein-bars/> [retrieved on 20200116]
- "Snickers protein", 1 January 2018 (2018-01-01), XP002796949, Retrieved from the Internet <URL:https://www.proteinescenter.com/831-snickers-protein-mars.html> [retrieved on 20200115]

## Description

### TECHNICAL FIELD

This disclosure relates to a snack product or snack bar, and more particularly, to dual-layered snack product having a high protein content according to the present set of claims.

### BACKGROUND

Food products and food product manufacturing systems are known. While existing food products and food product manufacturing systems and methods perform adequately for their intended purpose, improvements to food products and food product manufacturing systems and methods are continuously being sought in order to advance the arts.

Traditional high-protein food product bars, and particularly, food product bars having a high-protein nougat, are known to experience water migration over extended periods of time. This phenomenon is particularly common in high-protein nougats, as water content within the nougat may migrate towards relatively high-protein locals within the nougat. This migration of water to high-protein portions may result in minimized shelf life and/or undesirable, dry chew texture, and/or degraded aesthetics caused by the dehydrated portions of the nougat layer. To mitigate the dehydration of the high-protein nougat, food product bars of the prior art are often enrobed in a low-protein, high-sugar coating, such as chocolate. While suitable for preserving moisture, enrobing food product bars diminishes the overall nutritional value (i.e. lower protein content, higher fat and sugar content) and minimizes the aesthetics of the food product bar by concealing the nutritional, high-protein layers and giving the appearance of a candy product. Thus, products and methods for providing a high-protein food product bars including a high-protein nougat that is not enrobed continue to be sought.

In the state of the art are known the following documents:
- US 2005/249868 A1 which discloses a high protein, low carbohydrate nougat having at least one sugar substitute, protein material and at least one flavoring. The sugar substitute comprises between about 19% to about 46% of the nougat by weight, the protein material comprises between about 25% to about 38% of the nougat by weight, and the flavoring comprises between about 7% to about 37% of the nougat by weight.
- WO 01 /64044 A2 which discloses a nutritional food bar for providing sustained energy to the consumer is provided. The bar has a core, a coating, and comprises a mixture of vitamins, minerals, proteins, carbohydrates and fats. The core is a non-baked, grain-based core comprised of at least one extruded rice crisp and at least one toasted puffed rice crisp. The coating is a confectioner's coating which is selected from chocolate and compound coatings.
- The article "Raw snickers bar", disclosed in http://healthyessencefood.com/recipe/raw-snickers-bar
- The article "No-bake snickers protein bars", disclosed in https://busybuthealthy.com/no-bake-snickers-protein-bars/
- The article "Snickers protein", disclosed in https://www.proteinescenter.com/831-snickers-protein-mars.html

### SUMMARY

This section provides a general summary of the disclosure, and is not a comprehensive disclosure of its full scope or all of its features. The invention is set out in the appended set of claims.

One aspect of the disclosure provides food product bar having a first layer comprising a conglomerate of edible particles, the first layer having a protein concentration of at least 20% by weight, and a second layer covering the first layer and comprising a nougat, the second layer having a protein concentration of at least 34% by weight, whereby a total protein concentration of the food product bar is at least 25% by weight, wherein the first layer (20) comprises: rolled oats (22a) at a concentration of ranging from 5% to 10%, by weight; protein crisps (22b) at a concentration ranging from 10% to 15%, by weight; nuts (22c) at a concentration ranging from 40% to 44%, by weight; and binder syrup at a concentration ranging from 31% to 45%, by weight.

Implementations of the disclosure may include one or more of the following optional features. In some implementations each of the first layer and the second layer are exposed.

In some examples, the first layer is continuously formed from a first end of the food product bar to a second end of the food product bar, and the second layer includes a plurality of partitions spaced from the first end to the second end. Here, the partitions may be slices through an entire thickness of the second layer.

In some implementations, the first layer consists essentially of rolled oats, protein crisps, almonds, and binder syrup.

In some implementations a plurality additives deposited on the second layer. Here, the additives may include at least one of dried fruits, seeds, nuts.

Another aspect of the disclosure provides a food product bar consisting of a first layer comprising a conglomerate of edible particles, the first layer having a protein concentration of at least 20% by weight, and a second layer covering the first layer and comprising a nougat, the second layer having a protein concentration of at least 34% by weight, whereby a total protein concentration of the food product bar is at least 25% by weight.

Yet another aspect of the disclosure includes a method of forming a food product bar. The method comprises mixing a first plurality of components to form a first layer conglomerate having a plurality of edible particles, the first layer conglomerate having a concentration of protein of at least 20%, by weight. The method further includes mixing a second plurality of components to form a second layer conglomerate including a nougat, the second layer conglomerate having a concentration of protein of at least 34%, by weight. A first amount of the first layer conglomerate is deposited to form a first layer, and a second amount of the second layer conglomerate is deposited atop the first layer to form a stratified base slab, whereby the base slab has a concentration of protein of at least 25%, by weight.

In some examples, the method includes forming partitions in the second layer. Here, the partitions are formed through an entire thickness of the second layer. In some implementations, each of the first layer and the second layer is cold-formed.

In some examples, the method includes depositing an additive to at least one of the first layer and the second layer.

In some implementations, the method further comprises cutting the base slab into a plurality of the food product bars, wherein each of the food product bars includes the first layer and the second layer.

In the method of the invention, the first layer conglomerate comprises rolled oats at a concentration of ranging from 5% to 10%, by weight, protein crisps at a concentration ranging from 10% to 15%, by weight, nuts at a concentration ranging from 40% to 44%, by weight, and binder syrup at a concentration ranging from 31% to 45%, by weight.

In some implementations, the food product bar is individually packaged.

In some examples, the first layer and the second layer are exposed within the package.

In some implementations, the second layer includes light amber honey, hydrolyzed milk protein concentrate, hydrolyzed milk protein isolate, canola oil, almond butter, water, glycerin, milk protein isolate, flaxseed powder, oat fiber, and flour salt.

The details of one or more implementations of the disclosure are set forth in the accompanying drawings and the description below. Other aspects, features, and advantages will be apparent from the description and drawings, and from the claims.

### DESCRIPTION OF DRAWINGS

The drawings described herein are for illustrative purposes only of selected configurations and not all possible implementations, and are not intended to limit the scope of the present disclosure.
FIG. 1 is a perspective view of a food product bar according to the principles of the present disclosure;
FIG. 2 is a bottom plan view of the food product bar of FIG. 1;
FIG. 3 is a side elevation view of the food product bar of FIG. 1;
FIG. 4 is a top plan view of the food product bar of FIG. 1; and
FIG. 5 is a diagram showing a process for forming a food product bar according to the principles of the present disclosure.

Like reference symbols in the various drawings indicate like elements.

### DETAILED DESCRIPTION

Example configurations will now be described more fully with reference to the accompanying drawings. Example configurations are provided so that this disclosure will be thorough, and will fully convey the scope of the disclosure to those of ordinary skill in the art. Specific details are set forth such as examples of specific components, devices, and methods, to provide a thorough understanding of configurations of the present disclosure.

When an element or layer is referred to as being "on," "engaged to," "connected to," "attached to," or "coupled to" another element or layer, it may be directly on, engaged, connected, attached, or coupled to the other element or layer, or intervening elements or layers may be present. In contrast, when an element is referred to as being "directly on," "directly engaged to," "directly connected to," "directly attached to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The terms first, second, third, etc. may be used herein to describe various elements, components, regions, layers and/or sections. These elements, components, regions, layers and/or sections should not be limited by these terms. These terms may be only used to distinguish one element, component, region, layer or section from another region, layer or section. Terms such as "first," "second," and other numerical terms do not imply a sequence or order unless clearly indicated by the context. Thus, a first element, component, region, layer or section discussed below could be termed a second element, component, region, layer or section without departing from the teachings of the example configurations.

As referred to herein, all compositional percentages are by weight of the total composition, unless otherwise specified. Disclosures of ranges are, unless specified otherwise, inclusive of endpoints and include all distinct values and further divided ranges within the entire range. Thus, for example, a range of "from A to B" or "from about A to about B" is inclusive of A and of B. Disclosure of values and ranges of values for specific parameters (such as amounts, weight percentages, etc.) are not exclusive of other values and ranges of values useful herein. It is envisioned that two or more specific exemplified values for a given parameter may define endpoints for a range of values that may be claimed for the parameter. For example, if Parameter X is exemplified herein to have value A and also exemplified to have value Z, it is envisioned that Parameter X may have a range of values from about A to about Z. Similarly, it is envisioned that disclosure of two or more ranges of values for a parameter (whether such ranges are nested, overlapping or distinct) subsume all possible combination of ranges for the value that might be claimed using endpoints of the disclosed ranges. For example, if Parameter X is exemplified herein to have values in the range of 1-10, or 2-9, or 3-8, it is also envisioned that Parameter X may have other ranges of values including 1-9, 1-8, 1-3, 1-2, 2-10, 2-8, 2-3, 3-10, 3-9, and so on.

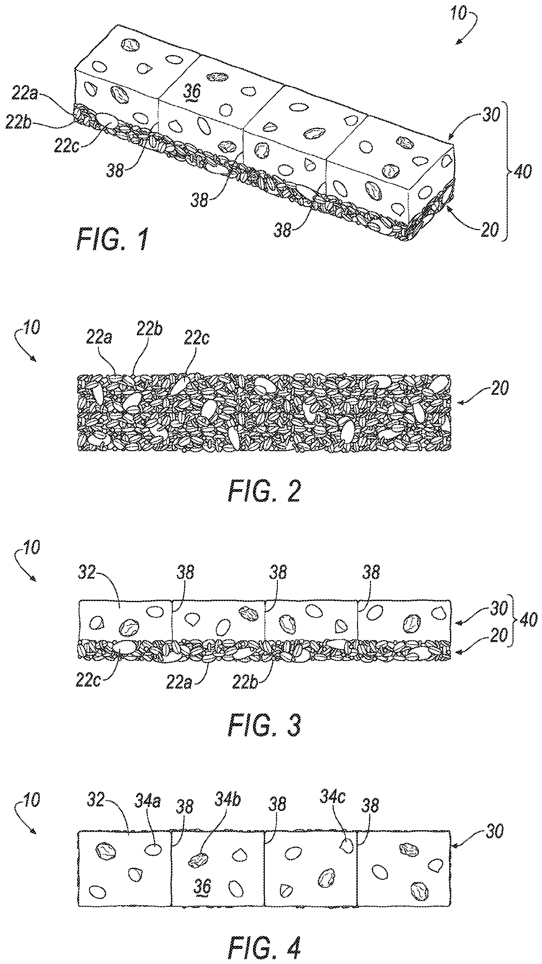

With reference to FIGS. 1-4, the present disclosure relates to a dual-textured food product bar 10 prepared using cold-forming processes and having a total protein content of at least 25%, by weight. Specifically, the food product bar 10 is formed as a laminate structure having first layer 20 and a second layer 30. The first layer 20 is formed of a conglomerate including edible particles 22a, 22b, 22c bound together with a binder syrup to provide a crunchy texture to the bottom portion of the snack bar 10. The food product bar 10 further includes a second layer 30 disposed atop and covering the first layer 20, whereby the second layer 30 has a substantially chewy nougat 32 composition with one or more solid additives 34 for flavoring and/or texture. In illustrated examples, the food product bar 10 is formed without any enrobing layers, whereby each of the first layer 20 and the second layer 30 are exposed. Accordingly, the food product bar 10 may be described as consisting of the first layer 10 and the second layer 20.

The first layer 20 has a protein concentration of at least 20% by weight, and accounts for about 33.25% of the total weight of the food product bar 10, while the second layer 30 has a protein concentration of at least 34% by weight, and accounts for about 61.75% of the total weight of the food product bar 10. Accordingly, the total protein concentration of the food product bar 10 is greater than 25%, by weight, and more particularly, at least 29%, by weight. In other examples, the first layer 20 and the second layer 30 may account for lesser or greater amounts of the food product bar 10, where the total protein concentration of the food product bar 10 is at least 25%, by weight.

The layers 20, 30 can be of any desired thickness and can be arranged in any suitable way. As shown, the first layer 20 and the second layer 30 are arranged horizontally in a laminate configuration, whereby the layers 20, 30 are stratified. The food product bar 10 can be formed of any shape and size. In the illustrated example shown in FIG. 1, the food product bar 10 is formed as a box-shaped bar. However, the food product bar 10 may be formed of any shape.

With continued reference to FIGS. 1-4, the first layer 20 of the food product bar 10 comprises a blend of edible particles 22a, 22b, 22c, which are joined together with a binder syrup (not shown) to form a first layer conglomerate composition. The edible particles 22a, 22b, 22c of the first layer may include a combination of grains, puffed protein crisps, and/or nuts to provide a crunchy, high-protein composition. Example formulations for the first layer conglomerate and the binder syrup are shown in Tables 1A, 1B, 2A, and 2B, below.

**Table 1A: First Layer Conglomerate**

| Component | % Weight |
|---|---|
| Rolled Oats - #5 | 7.100 |
| Milk Protein Crisp - 74% | 13.200 |
| Binder syrup | 38.000 |
| Almonds - Dry Roasted - Diced (Medium) | 41.700 |

**Table 1B: First Layer Conglomerate**

| Component | % Weight |
|---|---|
| Rolled Oats - #5 | 5.00-10.00 |
| Milk Protein Crisp - 74% | 10.00-15.00 |
| Binder syrup | 31.00-45.00 |
| Almonds - Dry Roasted - Diced (Medium) | 40.00-44.00 |

**Table 2A: Binder Syrup**

| Component | % Weight |
|---|---|
| Oleoresin Rosemary | 0.091 |
| Natural Hazelnut Latte Flavoring | 0.152 |
| Extra Coarse Sea Salt | 0.761 |
| Glycerin | 3.553 |
| Oat Fiber | 6.091 |
| Expeller Pressed High Oleic Sunflower Oil | 6.091 |
| Brown Rice Syrup Solids 50 DE | 33.503 |
| Brown Rice Syrup 60 DE | 49.756 |

**Table 2B: Binder Syrup**

| Component | % Weight |
|---|---|
| Oleoresin Rosemary | 0-1.00 |
| Natural Hazelnut Latte Flavoring | 0-1.00 |
| Extra Coarse Sea Salt | 0-1.00 |
| Glycerin | 2.00-5.00 |
| Oat Fiber | 4.00-8.00 |
| Expeller Pressed High Oleic Sunflower Oil | 4.00-8.00 |
| Brown Rice Syrup Solids 50 DE | 25.00-40.00 |
| Brown Rice Syrup 60 DE | 30.00-50.00 |

The grain 22a includes rolled oats (#5) provided at a concentration of 5% to 10% by weight of the first layer conglomerate, preferably in the range of about 6% to about 8%, and more at preferably 7.1%. Although rolled oats were included in the first layer conglomerate, other types of grains 22a may be included in the conglomerate alternatively or in addition to the rolled oats.

The first layer conglomerate further includes protein crisps 22b having a protein content of at least 74%, by weight. One suitable example of protein crisps includes milk protein crisps 22b, such as Crunchie^{™} brand milk protein crisps manufactured by Glanbia Nutritionals, for example. In other examples, the protein crisps may include other types of meat, dairy, or plant based protein crisps, such as whey protein crisps, pea protein crisps, wheat protein crisps, rice protein crisps, soy protein crisps, for example. The protein crisps 22b are provided at a concentration of 10% to 15% by weight of the first layer conglomerate, preferably at 13.2%

In addition to the grains 22a and protein crisps 22b, the first layer conglomerate includes one or more nuts 22c. In the illustrated example, the nuts 22c may be medium diced, dry roasted almonds. However, in other examples, the nuts may include pistachios, peanuts, cashews, pecans, hazelnuts, pine nuts, or walnuts, for example. Furthermore, the nuts may be provided in different states, such as whole, ground, sliced, or chopped. Different sizes of the nuts may also be considered. In the illustrated example, the almonds are provided at a concentration of 40% to 44% by weight of the first layer conglomerate, preferably at 41.7%.

As shown above, the binder syrup makes up the balance of the concentration of the first layer conglomerate. Accordingly, the binder syrup is provided at a concentration of 31% to 45% by weight of the conglomerate, and preferably at 38%.

The second layer 30 of the food product bar 10 is formed of a high-protein nougat material 32, and includes one or more solid additives 34a, 34b, 34c for flavoring texture. Accordingly, although the second layer 30 provides a substantially chewy mouthfeel, the second layer 30 may include the solid additives to provide a non-homogenous composition. While the first layer 20 may generally be formed of similar components and concentrations across all varieties of the food product bar 10, as set forth above, the second layer 30 is configured to provide a unique texture and flavor to each variety of the food product bar 10, as described in greater detail below. Various examples of varieties of the second layer 30 are set forth below, and include a hazelnut latte flavored second layer (Example 1), a raspberry almond flavored second layer (Example 2), and a tropical citrus flavored second layer (Example 3).

Generally, the second layer 30 includes a sweetener, hydrolyzed milk protein concentrate, hydrolyzed milk protein isolate, canola oil, almond butter, water, glycerin, milk protein isolate, flaxseed powder, oat fiber, and flour salt. However, in some examples, up to 60% of the sugar may be substituted with one or more soluble fibers. The second layer may further include various flavorings and natural preservatives, as described in the examples provided below.

Optionally, one or more solid additives 34a, 34b, 34c can also be added to at least one of the first layer conglomerate or the second layer conglomerate, or can be deposited as a topping to the second layer 30 and can include natural additives 34a, such as seeds, nuts, nut pieces, and so forth. Additives further include any fruit flavors 34b such as fresh fruits, dried fruits, fruit products, and so on. Additives may also include flavoring additives 34c, such as candies, marshmallows, "marbits," chocolates and chocolate products, fats, salts, honeys, cheeses, frosting, powdered food products, sugar, sugar substitutes, gelatins and spices. Additives may also include colorings as well as any nut flavors as well as any sweet flavors such as chocolate, vanilla, caramel, butterscotch, lemon, malt, cinnamon, graham, coconut flavors, mint and so on. Additives additionally include any savory flavors such as all meat, game, fowl, fish, dairy, barbecue, smoke, pepper, spicy and vegetable flavors.

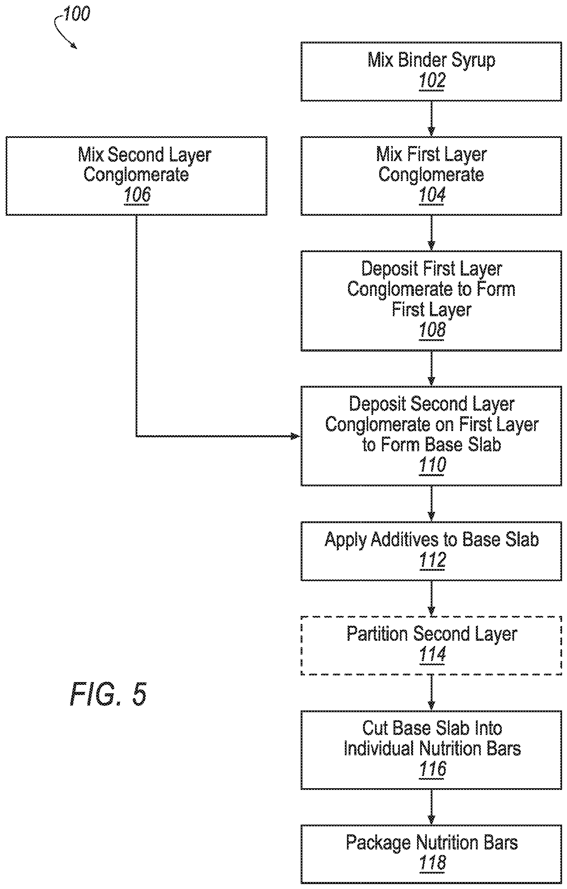

With reference to FIG. 5, a process 100 for forming the food product bar 10 is described. Initially, the components forming the binder syrup (see Table 2, above) are mixed in a standard mixing process at Step 102. The binder syrup is then combined with the grains 22a, protein crisps 22b, and nuts 22c at the concentrations shown in Table 1 using a standard mixing process, to form the first layer conglomerate Step 104. In a parallel Step 106, the second layer conglomerate is prepared by mixing the components of the second layer conglomerate using a standard mixing process.

With the first layer conglomerate and the second layer conglomerate prepared, the first layer conglomerate is deposited at Step 108 to form the first layer 20. The first layer 20 may be formed using a cold forming process, whereby first layer 20 is formed and cured without baking. In some examples, the first layer 20 may be formed as a continuous sheet having a substantially uniform thickness and composition.

At Step 110, the second layer conglomerate is deposited upon the first layer 20 to form a base slab 40 including the first layer 20 and the second layer 30 arranged as a continuously formed laminate sheet, having the first layer 20 forming a bottom surface of the base slab 40 and the second layer 30 disposed atop the first layer 20. As with the first layer 20, the second layer 30 has a substantially uniform thickness and composition, such the thickness and composition of the resulting base slab 40 is substantially uniform.

Optionally, at Step 112, additives may be added to the base slab. In some examples, the additives may be sprinkled or deposited on a top surface of the second layer 30. Additionally or alternatively, the additives 34 may be incorporated into at least one of the first layer 20 or the second layer 30.

The base slab may be subjected to one or more forming steps before or after the additives 34 are added, whereby the relatively soft and deformable second layer 30 is pressed into top surface of the first layer 20. Here, the soft nougat of the second layer 30 may flow under pressure into interstices formed between the edible particles 22 of the first layer 20 to form a mechanical bond between the first layer 20 and the second layer 30. Here, the additives 34 applied to the top surface of the second layer 30 may be impressed into a top surface 36 of the second layer 30, whereby the top surface 36 is substantially flush.

In another optional Step 114, the second layer 30 of the base slab may have a plurality of partitions 38 formed therein. As shown in FIGS. 1 and 3, the partitions 38 are formed through an entire thickness of the second layer 30, and allow the food product bar 10 to be portioned during consumption.

At Step 116, the base slab is cut into a plurality of individual ones of the food product bars 10, which are then packaged at Step 118. In some examples, the food product bars 10 may be individually packaged. Alternatively, the food product bars 10 may be packed in bulk.

### EXAMPLES

The following examples illustrate variations of the food product bar 10 and process 100 described above, wherein different compositions of the second layer 20 and additives 34 are provided for forming different varieties of the food product bar 10.

### EXAMPLE 1

In one example, hazelnut latte flavored food product bars 10 were prepared using the method described above. Here, the first layer conglomerate was prepared as provided using the components listed in Table 1, above. As shown in Table 3A and 3B, below, the second layer conglomerate of Example 1 was mixed to form a hazelnut latte flavored nougat including diced almonds and hazelnuts.

**Table 3A: Second Layer Conglomerate - Example 1**

| Component | % Weight |
|---|---|
| Light Amber Honey | 26.069 |
| Hydrolyzed Milk Protein Concentrate | 24.686 |
| Hydrolyzed Milk Protein Isolate | 10.862 |
| Canola Oil | 9.282 |
| Almond Butter - Roasted | 4.937 |
| Almonds - Dry Roasted - Diced (Medium) | 4.937 |
| Hazelnuts - Dry Roasted - Diced (Medium) | 4.937 |
| Water | 4.839 |
| Glycerin | 4.542 |
| Milk Protein Isolate | 1.728 |
| Flaxseed Powder - Defatted (16 Mesh) | 1.086 |
| Oat Fiber | 0.987 |
| Natural Hazelnut Latte Flavoring | 0.395 |
| Oleoresin Rosemary | 0.296 |
| Flour Salt | 0.247 |
| Natural Masking Flavor | 0.118 |
| Organic High Vitamin D Mushroom Powder 5 | 0.049 |

**Table 3B: Second Layer Conglomerate - Example 1**

| Component | % Weight |
|---|---|
| Sugar | 10.00-40.00 |
| Soluble Fiber | 0.00-20.00 |
| Hydrolyzed Milk Protein Concentrate | 15.00-35.00 |
| Hydrolyzed Milk Protein Isolate | 5.00-15.00 |
| Canola Oil | 5.00-15.00 |
| Almond Butter - Roasted | 1.00-10.00 |
| Almonds - Dry Roasted - Diced (Medium) | 1.00-10.00 |
| Hazelnuts - Dry Roasted - Diced (Medium) | 1.00-10.00 |
| Water | 1.00-10.00 |
| Glycerin | 1.00-10.00 |
| Milk Protein Isolate | 0.00-3.00 |
| Flaxseed Powder - Defatted (16 Mesh) | 0.00-3.00 |
| Oat Fiber | 0.00-3.00 |
| Natural Hazelnut Latte Flavoring | 0.00-3.00 |
| Oleoresin Rosemary | 0.00-3.00 |
| Flour Salt | 0.00-3.00 |
| Natural Masking Flavor | 0.00-3.00 |
| Organic High Vitamin D Mushroom Powder 5 | 0.00-3.00 |

As described above, the food product bar 10 is formed by depositing the first layer conglomerate and the second layer conglomerate to form a stratified or laminate base slab including the first layer 20 and the second layer 30. In Example 1, the laminate base is then topped with extra coarse sea salt, organic cocoa nibs, and diced hazelnuts, as shown in Tables 4A and 4B, below.

**Table 4A: Finished Snack Bar - Example 1**

| Component | % Weight |
|---|---|
| Extra Coarse Sea Salt | 0.250 |
| Organic Cocoa Nibs | 1.950 |
| Hazelnuts - Dry Roasted - Diced (Medium) | 2.800 |
| First Layer Conglomerate | 33.250 |
| Second Layer Conglomerate | 61.750 |

**Table 4B: Finished Snack Bar - Example 1**

| Component | % Weight |
|---|---|
| Extra Coarse Sea Salt | 0.00-3.00 |
| Organic Cocoa Nibs | 0.00-4.00 |
| Hazelnuts - Dry Roasted - Diced (Medium) | 0.00-5.00 |
| First Layer Conglomerate | 25.00-45.00 |
| Second Layer Conglomerate | 50.00-70.00 |

### EXAMPLE 2

In another example, raspberry almond flavored food product bars 10 were prepared using the method described above. Here, the standard first layer conglomerate was prepared as provided in Table 1, above. As shown in Tables 5A and 5B, below, the second layer conglomerate of Example 2 was mixed to form a raspberry flavored nougat including diced almonds.

**Table 5A: Second Layer Conglomerate - Example 2**

| Components | % Weight |
|---|---|
| Light Amber Honey | 25.114 |
| Hydrolyzed Milk Protein Concentrate | 23.782 |
| Hydrolyzed Milk Protein Isolate | 10.464 |
| Almonds - Dry Roasted - Diced (Medium) | 9.513 |
| Canola Oil | 8.942 |
| Almond Butter - Roasted | 4.756 |
| Water | 4.661 |
| Glycerin | 4.376 |
| Raspberry Powder | 2.854 |
| Milk Protein Isolate | 1.665 |
| Flaxseed Powder - Defatted (16 Mesh) | 1.046 |
| Oat Fiber | 0.951 |
| Flour Salt | 0.476 |
| Natural Raspberry Goji Flavoring | 0.381 |
| Beet Powder, Air Dried | 0.381 |
| Oleoresin Rosemary | 0.285 |
| Natural Masking Flavor | 0.114 |
| Malic Acid | 0.095 |
| Citric Acid Anhydrous | 0.095 |
| Mushroom Powder | 0.048 |

**Table 5B: Second Layer Conglomerate - Example 2**

| Components | % Weight |
|---|---|
| Sugar | 10.00-40.00 |
| Soluble Fiber | 0.00-20.00 |
| Hydrolyzed Milk Protein Concentrate | 15.00-35.00 |
| Hydrolyzed Milk Protein Isolate | 5.00-15.00 |
| Almonds - Dry Roasted - Diced (Medium) | 5.00-15.00 |
| Canola Oil | 5.00-15.00 |
| Almond Butter - Roasted | 1.00-10.00 |
| Water | 1.00-10.00 |
| Glycerin | 1.00-10.00 |
| Raspberry Powder | 0.00-5.00 |
| Milk Protein Isolate | 0.00-3.00 |
| Flaxseed Powder - Defatted (16 Mesh) | 0.00-3.00 |
| Oat Fiber | 0.00-3.00 |
| Flour Salt | 0.00-3.00 |
| Natural Raspberry Goji Flavoring | 0.00-3.00 |
| Beet Powder, Air Dried | 0.00-3.00 |
| Oleoresin Rosemary | 0.00-3.00 |
| Natural Masking Flavor | 0.00-3.00 |
| Malic Acid | 0.00-3.00 |
| Citric Acid Anhydrous | 0.00-3.00 |
| Mushroom Powder | 0.00-3.00 |

As described above, the food product bar 10 is formed by depositing the first layer conglomerate and the second layer conglomerate to form a stratified or laminate base including the first layer 20 and the second layer 30. In Example 2, the laminate base was then topped with black chia seeds, freeze-dried raspberries, and almonds, as shown in Tables 6A and 6B, below.

**Table 6A: Finished Snack Bar - Example 2**

| Components | % Weight |
|---|---|
| Black Chia Seed | 0.250 |
| Freeze Dried Raspberries - Sliced - 1/2" | 0.750 |
| Almonds - Sliced | 4.000 |
| First Layer Conglomerate | 33.250 |
| Second Layer Conglomerate | 61.750 |

**Table 6B: Finished Snack Bar - Example 2**

| Components | % Weight |
|---|---|
| Black Chia Seed | 0.00-1.00 |
| Freeze Dried Raspberries - Sliced - 1/2" | 0.00-1.00 |
| Almonds - Sliced | 1.00-10.00 |
| First Layer Conglomerate | 25.00-45.00 |
| Second Layer Conglomerate | 50.00-70.00 |

### EXAMPLE 3

In another example, tropical citrus flavored food product bars 10 were prepared using the method described above. Here, the standard first layer conglomerate was prepared as provided in Table 1, above. As shown in Table 7, below, the second layer conglomerate of Example 3 was mixed to form tropical citrus flavored nougat including diced almonds as a solid additive.

**Table 7A - Second Layer Conglomerate - Example 3**

| | Components | % Weight |
|---|---|---|
| Light Amber Honey | | 25.867 |
| Hydrolyzed Milk Protein Concentrate | | 24.495 |
| Hydrolyzed Milk Protein Isolate | | 10.778 |
| Almonds - Dry Roasted - Diced (Medium) | | 9.798 |
| Canola Oil | | 9.210 |
| Almond Butter - Roasted | | 4.899 |
| Water | | 4.801 |
| Glycerin | | 4.507 |
| Milk Protein Isolate | | 1.715 |
| Flaxseed Powder - Defatted (16 Mesh) | | 1.078 |
| Oat Fiber | | 0.980 |
| Flour Salt | | 0.490 |
| Citric Acid Anhydrous | | 0.412 |
| Natural Orange Mango Flavoring | | 0.392 |
| Oleoresin Rosemary | | 0.294 |
| Natural Masking Flavor | | 0.118 |
| Malic Acid, Fine Granulated | | 0.078 |
| Citric Acid Anhydrous | | 0.049 |
| Mushroom Powder | | 0.039 |

**Table 7B - Second Layer Conglomerate - Example 3**

| | Components | % Weight |
|---|---|---|
| Sugar | | 10.00-40.00 |
| Soluble Fiber | | 0.00-20.00 |
| Hydrolyzed Milk Protein Concentrate | | 15.00-35.00 |
| Hydrolyzed Milk Protein Isolate | | 5.00-15.00 |
| Almonds - Dry Roasted - Diced (Medium) | | 5.00-15.00 |
| Canola Oil | | 5.00-15.00 |
| Almond Butter - Roasted | | 1.00-10.00 |
| Water | | 1.00-10.00 |
| Glycerin | | 1.00-10.00 |
| Milk Protein Isolate | | 15.00-35.00 |
| Flaxseed Powder - Defatted (16 Mesh) | | 0.00-3.00 |
| Oat Fiber | | 0.00-3.00 |
| Flour Salt | | 0.00-3.00 |
| Citric Acid Anhydrous | | 0.00-3.00 |
| Natural Orange Mango Flavoring | | 0.00-3.00 |
| Oleoresin Rosemary | | 0.00-3.00 |
| Natural Masking Flavor | | 0.00-3.00 |
| Malic Acid, Fine Granulated | | 0.00-3.00 |
| Citric Acid Anhydrous | | 0.00-3.00 |
| Mushroom Powder | | 0.00-3.00 |

As described above, the food product bar 10 was formed by depositing the first layer conglomerate and the second layer conglomerate to form a stratified or laminate base including the first layer 20 and the second layer 30. In Example 3, the laminate base was then topped with freeze-dried pineapple, coconut chips, and freeze-dried pomegranate arils, as shown in Tables 8A and 8B, below.

**Table 8A - Food product bar - Example 3**

| Components | % Weight |
|---|---|
| Freeze Dried Pineapple - 5-6mm | 0.750 |
| Coconut Chips - Toasted - Unsweetened | 1.750 |
| Freeze Dried Pomegranate Arils | 2.500 |
| First Layer Conglomerate | 33.250 |
| Second Layer Conglomerate | 61.750 |

**Table 8B - Food product bar - Example 3**

| Components | % Weight |
|---|---|
| Freeze Dried Pineapple - 5-6mm | 0.00-2.00 |
| Coconut Chips - Toasted - Unsweetened | 0.00-4.00 |
| Freeze Dried Pomegranate Arils | 0.00-5.00 |
| First Layer Conglomerate | 25.00-45.00 |
| Second Layer Conglomerate | 50.00-70.00 |

The food product bar 10 and process 100 disclosed provide several benefits over prior food product bars. For example, by providing a crunchy first layer and a chewy second layer, without enrobing the food product bar 10 in an outer coating, the food product bar provides two exposed layers having different textures, which has been found to provide a favorable texture experience (i.e., mouthfeel) and visual appearance. The food product bar 10 of the instant disclosure has also been found to provide clean eating and portion control by incorporating partitions into the second layer.

Additionally, the continuous structure provided by the first layer contributes to increased durability of the food product bar during handling, while the functional fibers in the components forming the second layer lead to stability over the shelf life of the food product bar 10. Thus, the food product bar 10 of the instant disclosure provides the structural advantages of an enrobed food product, but maintains a high protein concentration by eliminating the need for using a high-sugar enrobing composition, such as chocolate or syrup.

Yet another benefit of the food product bar 10 disclosed herein includes improved lubricity of chew that the binder syrup of the first layer 20 provides to the second layer 30 when the food product 10 is chewed down. As discussed above with respect to food product bars of the prior art, high-protein nougat layers are known to become difficult to chew when not enrobed due to natural migration of moisture within the high-protein layers, over time. However, in the food product bar 10 of the instant disclosure, the binder syrup of the first layer 20 is formulated to moisturize and improve lubricity of the nougat of the second layer 30 during chewing. Thus, shelf life of the food product bar 10 can be extended without negatively affecting lubricity and mouthfeel during consumption.

In one example, the food product bar (10) comprises a first layer (20) comprising a conglomerate of edible particles (22a, 22b, 22c), the first layer (20) having a protein concentration of at least 20% by weight; and a second layer (30) covering the first layer (20) and comprising a nougat (32), the second layer (30) having a protein concentration of at least 34% by weight, whereby a total protein concentration of the food product bar (10) is at least 25% by weight.

The food product bar may further comprise a plurality of additives (34a, 34b, 34c) deposited on the second layer (30). Here, the additives (34a, 34b, 34c) may include at least one of dried fruits, seeds, or nuts.

Alternatively a food product bar (10) may consist of: a first layer (20) comprising a conglomerate of edible particles (22a, 22b, 22c), the first layer (20) having a protein concentration of at least 20% by weight; and a second layer (30) covering the first layer (20) and comprising a nougat (32), the second layer (30) having a protein concentration of at least 34% by weight, whereby a total protein concentration of the food product bar (10) is at least 25% by weight.

Complementarily, the first layer (20) of the food product bar consists of: rolled oats (22a) at a concentration of ranging from 5% to 10%, by weight; protein crisps (22b) at a concentration ranging from 10% to 15%, by weight; nuts (22c) at a concentration ranging from 40% to 44%, by weight; and binder syrup at a concentration ranging from 31% to 45%, by weight.

The method of forming a food product bar (10), may include mixing a first plurality of components (104) to form a first layer conglomerate having a plurality of edible particles (22a, 22b, 22c,), the first layer conglomerate having a concentration of protein of at least 20%, by weight; mixing a second plurality of components (106) to form a second layer conglomerate including a nougat (32), the second layer conglomerate having a concentration of protein of at least 34%, by weight; depositing a first amount of the first layer conglomerate (108) to form a first layer (20); and depositing a second amount of the second layer conglomerate (110) atop the first layer (20) to form a stratified base slab (40) including the first layer (20), whereby the base slab (40) has a concentration of protein of at least 25%, by weight.
The method previously exposed may comprise forming partitions (38) in the second layer (30).

Complementarily, the partitions (38) may be formed through an entire thickness of the second layer (30).

## Claims

1. A food product bar (10) comprising:
a first layer (20) comprising a conglomerate of edible particles (22a, 22b, 22c), the first layer (20) having a protein concentration of at least 20% by weight; and
a second layer (30) covering the first layer (20) and comprising a nougat (32), the second layer (30) having a protein concentration of at least 34% by weight, whereby a total protein concentration of the food product bar (10) is at least 25% by weight,
wherein the first layer (20) comprises:
rolled oats (22a) at a concentration of ranging from 5% to 10%, by weight;
protein crisps (22b) at a concentration ranging from 10% to 15%, by weight;
nuts (22c) at a concentration ranging from 40% to 44%, by weight; and
binder syrup at a concentration ranging from 31% to 45%, by weight.

2. The food product bar (10) of Claim 1, wherein each of the first layer (20) and the second layer (30) are exposed.

3. The food product bar (10) of Claim 1, wherein the first layer (20) is continuously formed from a first end of the food product bar (10) to a second end of the food product bar (10), and the second layer (30) includes a plurality of partitions (38) spaced from the first end to the second end.

4. The food product bar (10) of Claim 3, wherein the partitions (38) are slices through an entire thickness of the second layer (30).

5. The food product bar (10) of Claim 1, wherein the first layer (20) consists essentially of rolled oats (22a), protein crisps (22b), almonds (22c), and binder syrup.

6. The food product bar (10) of Claim 1, further comprising a plurality additives (34a, 34b, 34c) deposited on the second layer (30), the additives (34a, 34b, 34c) including at least one of dried fruits, seed, or nuts.

7. A method (100) of forming a food product bar (10), the method comprising:
mixing a first plurality of components (104) to form a first layer conglomerate having a plurality of edible particles (22a, 22b, 22c,), the first layer conglomerate having a concentration of protein of at least 20%, by weight;
mixing a second plurality of components (106) to form a second layer conglomerate including a nougat (32), the second layer conglomerate having a concentration of protein of at least 34%, by weight;
depositing a first amount of the first layer conglomerate (108) to form a first layer (20); and
depositing a second amount of the second layer conglomerate (110) atop the first layer (20) to form a stratified base slab (40) including the first layer (20), whereby the base slab (40) has a concentration of protein of at least 25%, by weight,
wherein the first layer conglomerate comprises:
rolled oats (22a) at a concentration of ranging from 5% to 10%, by weight;
protein crisps (22b) at a concentration ranging from 10% to 15%, by weight;
nuts (22c) at a concentration ranging from 40% to 44%, by weight; and
binder syrup at a concentration ranging from 31% to 45%, by weight.

8. The method of Claim 7, wherein each of the first layer (20) and the second layer (30) is cold-formed.

9. The method of Claim 7, further comprising depositing an additive (112) to at least one of the first layer (20) and the second layer (30).

10. The method of Claim 7, further comprising cutting the base slab (40) into a plurality of the food product bars (116), wherein each of the food product bars (10) includes the first layer (20) and the second layer (30).

11. The method of Claim 7, wherein the food product bar (10) is individually packaged.

12. The method of Claim 7, wherein the first layer (20) and the second layer (30) are exposed.

13. The method of Claim 7, wherein the second layer (30) includes light amber honey, hydrolyzed milk protein concentrate, hydrolyzed milk protein isolate, canola oil, almond butter, water, glycerin, milk protein isolate, flaxseed powder, oat fiber, and flour salt.

## Patentansprüche

1. Lebensmittelriegel (10), umfassend:
eine erste Schicht (20), umfassend ein Konglomerat essbarer Teilchen (22a, 22b, 22c), wobei die erste Schicht (20) eine Proteinkonzentration von mindestens 20 Gewichts-% aufweist; und
eine zweite Schicht (30), die die erste Schicht (20) abdeckt und einen Nougat (32) umfasst, wobei die zweite Schicht (30) eine Proteinkonzentration von mindestens 34 Gewichts-% aufweist, wodurch eine Gesamtproteinkonzentration des Lebensmittelriegels (10) mindestens 25 Gewichts-% beträgt,
wobei die erste Schicht (20) Folgendes umfasst:
Haferflocken (22a) in einer Konzentration im Bereich von 5 bis 10 Gewichts-%;
Proteinchips (22b) in einer Konzentration im Bereich von 10 bis 15 Gewichts-%;
Nüsse (22c) in einer Konzentration im Bereich von 40 bis 44 Gewichts-%; und
Bindemittelsirup in einer Konzentration im Bereich von 31 bis 45 Gewichts-%.

2. Lebensmittelriegel (10) nach Anspruch 1, wobei sowohl die erste Schicht (20) als auch die zweite Schicht (30) freiliegen.

3. Lebensmittelriegel (10) nach Anspruch 1, wobei die erste Schicht (20) kontinuierlich von einem ersten Ende des Lebensmittelriegels (10) zu einem zweiten Ende des Lebensmittelriegels (10) geformt wird und die zweite Schicht (30) eine Vielzahl von Abtrennungen (38) einschließt, die vom ersten Ende zum zweiten Ende beabstandet sind.

4. Lebensmittelriegel (10) nach Anspruch 3, wobei die Abtrennungen (38) Scheiben durch die gesamte Stärke der zweiten Schicht (30) sind.

5. Lebensmittelriegel (10) nach Anspruch 1, wobei die erste Schicht (20) im Wesentlichen aus Haferflocken (22a), Proteinchips (22b), Mandeln (22c) und Bindemittelsirup besteht.

6. Lebensmittelriegel (10) nach Anspruch 1, ferner umfassend eine Vielzahl von Zusatzstoffen (34a, 34b, 34c), die auf der zweiten Schicht (30) aufgebracht sind, wobei die Zusatzstoffe (34a, 34b, 34c) mindestens eines von Trockenfrüchten, Samen oder Nüsse einschließen.

7. Verfahren (100) zum Formen eines Lebensmittelriegels (10), wobei das Verfahren Folgendes umfasst:
Mischen einer ersten Vielzahl von Komponenten (104), um ein Konglomerat der ersten Schicht zu formen, das eine Vielzahl von essbaren Teilchen (22a, 22b, 22c) aufweist, wobei das Konglomerat der ersten Schicht eine Proteinkonzentration von mindestens 20 Gewichts-% aufweist;
Mischen einer zweiten Vielzahl von Komponenten (106), um ein Konglomerat der zweiten Schicht zu bilden, das einen Nougat (32) einschließt, wobei das Konglomerat der zweiten Schicht eine Proteinkonzentration von mindestens 34 Gewichts-% aufweist;
Aufbringen einer ersten Menge des Konglomerats der ersten Schicht (108), um eine erste Schicht (20) zu bilden; und
Aufbringen einer zweiten Menge des Konglomerats der zweiten Schicht (110) auf der ersten Schicht (20), um eine geschichtete Basisplatte (40) zu formen, die die erste Schicht (20) einschließt,
wodurch die Basisplatte (40) eine Proteinkonzentration von mindestens 25 Gewichts-% aufweist,
wobei das Konglomerat der ersten Schicht Folgendes umfasst:
Haferflocken (22a) in einer Konzentration im Bereich von 5 bis 10 Gewichts-%;
Proteinchips (22b) in einer Konzentration im Bereich von 10 bis 15 Gewichts-%;
Nüsse (22c) in einer Konzentration im Bereich von 40 bis 44 Gewichts-%; und
Bindemittelsirup in einer Konzentration im Bereich von 31 bis 45 Gewichts-%.

8. Verfahren nach Anspruch 7, wobei jede der ersten Schicht (20) und der zweiten Schicht (30) kalt geformt wird.

9. Verfahren nach Anspruch 7, ferner umfassend das Aufbringen eines Zusatzstoffes (112) auf mindestens eine von der ersten Schicht (20) und der zweiten Schicht (30).

10. Verfahren nach Anspruch 7, ferner umfassend das Schneiden der Basisplatte (40) in eine Vielzahl von den Lebensmittelriegeln (116), wobei jeder der Lebensmittelriegel (10) die erste Schicht (20) und die zweite Schicht (30) einschließt.

11. Verfahren nach Anspruch 7, wobei der Lebensmittelriegel (10) einzeln verpackt ist.

12. Verfahren nach Anspruch 7, wobei die erste Schicht (20) und die zweite Schicht (30) freiliegen.

13. Verfahren nach Anspruch 7, wobei die zweite Schicht (30) hell bernsteinfarbenen Honig, hydrolysiertes Milchproteinkonzentrat, hydrolysiertes Milchproteinisolat, Canolaöl, Mandelbutter, Wasser, Glycerin, Milchproteinisolat, Leinsamenpulver, Haferfasern und Salzpulver einschließt.

## Revendications

1. Barre de produit alimentaire (10) comprenant :
une première couche (20) comprenant un conglomérat de particules comestibles (22a, 22b, 22c), la première couche (20) ayant une concentration en protéines d'au moins 20 % en poids ; et
une seconde couche (30) recouvrant la première couche (20) et comprenant un nougat (32), la seconde couche (30) ayant une concentration en protéines d'au moins 34 % en poids, moyennant quoi une concentration totale en protéines de la barre de produit alimentaire (10) est d'au moins 25 % en poids,
dans laquelle la première couche (20) comprend :
des flocons d'avoine (22a) en une concentration allant de 5 % à 10 %, en poids ;
des chips protéinées (22b) en une concentration allant de 10 % à 15 %, en poids ;
des noix (22c) en une concentration allant de 40 % à 44 %, en poids ; et
du sirop liant en une concentration allant de 31 % à 45 %, en poids.

2. Barre de produit alimentaire (10) selon la revendication 1, dans laquelle chacune de la première couche (20) et de la seconde couche (30) est exposée.

3. Barre de produit alimentaire (10) selon la revendication 1, dans laquelle la première couche (20) est formée en continu d'une première extrémité de la barre de produit alimentaire (10) à une seconde extrémité de la barre de produit alimentaire (10) et la seconde couche (30) renferme une pluralité de séparations (38) espacées de la première extrémité à la seconde extrémité.

4. Barre de produit alimentaire (10) selon la revendication 3, dans laquelle les séparations (38) sont des tranches sur toute une épaisseur de la seconde couche (30).

5. Barre de produit alimentaire (10) selon la revendication 1, dans laquelle la première couche (20) est constituée essentiellement de flocons d'avoine (22a), de chips protéinées (22b), d'amandes (22c) et de sirop liant.

6. Barre de produit alimentaire (10) selon la revendication 1, comprenant en outre une pluralité d'ingrédients supplémentaires (34a, 34b, 34c) déposés sur la seconde couche (30), les ingrédients supplémentaires (34a, 34b, 34c) en renfermant au moins un parmi des fruits secs, des graines ou des noix.

7. Procédé (100) de formation d'une barre de produit alimentaire (10), le procédé comprenant :
le mélange d'une première pluralité de composants (104) pour former un conglomérat de première couche ayant une pluralité de particules comestibles (22a, 22b, 22c), le conglomérat de première couche ayant une concentration en protéines d'au moins 20 %, en poids ;
le mélange d'une seconde pluralité de composants (106) pour former un conglomérat de seconde couche renfermant un nougat (32), le conglomérat de seconde couche ayant une concentration en protéines d'au moins 34 %, en poids ;
le dépôt d'une première quantité du conglomérat de première couche (108) pour former une première couche (20) ; et
le dépôt d'une seconde quantité du conglomérat de seconde couche (110) au-dessus de la première couche (20) pour former un bloc de base stratifié (40) renfermant la première couche (20),
moyennant quoi le bloc de base (40) a une concentration en protéines d'au moins 25 %, en poids,
dans lequel le conglomérat de première couche comprend :
des flocons d'avoine (22a) en une concentration allant de 5 % à 10 %, en poids ;
des chips protéinées (22b) en une concentration allant de 10 % à 15 %, en poids ;
des noix (22c) en une concentration allant de 40 % à 44 %, en poids ; et
du sirop liant en une concentration allant de 31 % à 45 %, en poids.

8. Procédé selon la revendication 7, dans lequel chacune de la première couche (20) et de la seconde couche (30) est formée à froid.

9. Procédé selon la revendication 7, comprenant en outre le dépôt d'un ingrédient supplémentaire (112) sur au moins l'une de la première couche (20) et de la seconde couche (30).

10. Procédé selon la revendication 7, comprenant en outre la découpe du bloc de base (40) en une pluralité de barres de produit alimentaire (116), dans lequel chacune des barres de produit alimentaire (10) renferme la première couche (20) et la seconde couche (30).

11. Procédé selon la revendication 7, dans lequel la barre de produit alimentaire (10) est emballée individuellement.

12. Procédé selon la revendication 7, dans lequel la première couche (20) et la seconde couche (30) sont exposées.

13. Procédé selon la revendication 7, dans lequel la seconde couche (30) renferme du miel ambré clair, du concentré de protéines de lait hydrolysées, de l'isolat de protéines de lait hydrolysées, de l'huile de colza, du beurre d'amandes, de l'eau, de la glycérine, de l'isolat de protéines de lait, de la poudre de graines de lin, des fibres d'avoine et du sel pulvérisé.
